# EUROPÄISCHE PATENTSCHRIFT

(11) **EP 0 613 928 B1**
(45) Veröffentlichungstag und Bekanntmachung des Hinweises auf die Patenterteilung: **13.10.1999**
(21) Anmeldenummer: 94102558.7
(22) Anmeldetag: 21.02.1994
(51) Int. Cl.: C09B 45/16, C09B 29/26, D06P 1/10

(54) **1:2 Chromkomplexfarbstoffe**
1:2 chromium complex dyes
Colorants à base d'un complexe chromé 1:2

(30) Priorität: 04.03.1993 DE 4306715
(43) Veröffentlichungstag der Anmeldung: 07.09.1994
(73) Patentinhaber: BAYER AG, 51368 Leverkusen (DE)
(72) Erfinder: Mennicke, Winfried, Dr., D-51375 Leverkusen (DE)

(56) Entgegenhaltungen:
- EP-A- 0 450 421
- DE-A- 3 544 118
- DE-C- 740 049
- US-A- 4 996 303
- PATENT ABSTRACTS OF JAPAN Bd. 002, Nr. 048 (C-010) 31 M{rz 1978 & JP-A-53 008 622 (TAOKA CHEM CO LTD) 26 Oktober 1978
- PATENT ABSTRACTS OF JAPAN Bd. 002, Nr. 038 (C-006) 14 M{rz 1978 & JP-A-52 138 526 (TAOKA CHEM CO LTD) 18 November 1977

## Beschreibung

Bei Lederfärbungen ist die PVC-Migrationsbeständigkeit oft nicht ausreichend. Ein Mangel, der vermehrt im Farbtonbereich von Bordo bis Blau beobachtet werden kann. So erhält man beispielsweise mit dem sehr gut wasserlöslichen zwei Sulfogruppen enthaltenden 1:2-Chromkomplexfarbstoff C.I. Acid Blue 193, 15707 blaue Lederfärbungen mit nicht zufriedenstellender Migrationsechtheit.

Es wurde nun gefunden, daß die nachfolgend beschriebenen bordo bis blauen Metallkomplexfarbstoffe, besonders wenn sie zwei Sulfogruppen aufweisen, egale Lederfärbungen mit ausgezeichneter PVC-Migrationsbeständigkeit liefern und zudem mit einer Reihe anderer migrationsechter Metallkomplexfarbstoffe gut kombinierbar sind.

Gegenstand der vorliegenden Erfindung sind neue 1:2-Chromkomplexfarbstoffe, deren Lösungen und die Verwendung der neuen 1:2-Chromkomplexfarbstoffe sowie deren Lösungen zum Färben von amidgruppenhaltigen Materialien.

Die neuen 1:2-Chromkomplexfarbstoffe entsprechen der Formel (I) 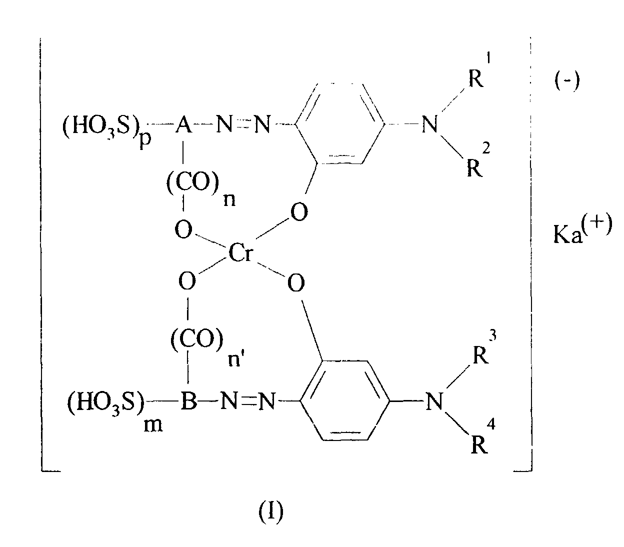 worin
A und B unabhängig voneinander für den Rest eines jeweils gegebenenfalls substituierten Benzol- oder Naphthalinringes stehen, wobei sich jeweils die komplexbildende Gruppe in o-Stellung zur Azogruppe befindet, und
R¹, R², R³ und R⁴ unabhängig voneinander für Wasserstoff, Alkyl, Aryl oder Aralkyl stehen, wobei ausgeschlossen ist, daß R¹/R² und/oder R³/R⁴, gleichzeitig Methyl bedeuten,
n, n', p und m unabhängig voneinander für die Zahl 0 oder 1 stehen, wobei die Summe aus p und m 1 oder 2 ist, und
Ka⁽⁺⁾ für ein Kation steht.

Bevorzugte Alkylgruppen sind solche mit 1 bis 4 C-Atomen, die gegebenenfalls weiter substituiert sein können, beispielsweise durch Cl, CN oder C₁-C₄-Alkoxy.

Aralkyl steht vorzugsweise für Aryl-C₁-C₂-alkyl und Aryl vorzugsweise für gegebenenfalls substituiertes Phenyl wobei als Substituenten Cl, Br, NO₂, C₁-C₄-Alkyl und C₁-C₄-Alkoxy in Frage kommen.

Das durch das Symbol Ka⁽⁺⁾ dargestellte Kation ist vorzugsweise ein Alkaliion, insbesondere ein Lithium-, Natrium- oder Kaliumion, ein Ammoniumion oder ein ein-, zwei-, drei oder viermal niedrigalkylsubstituiertes Ammoniumion.

Als Substituenten in den Ringen A und B kommen vorzugsweise in Frage: Acylamino, insbesondere Acetylamino, Alkyl, insbesondere Methyl, Alkoxy, insbesondere Methoxy, gegebenenfalls ein- oder zweimal durch Alkyl oder Aryl substituiertes Sulfamoyl, insbesondere N-Methyl-, N-Phenyl- oder N,N-Diethylsulfamoyl, Alkylsulfonyl, insbesondere Methylsulfonyl, Arylsulfonyl, insbesondere Phenylsulfonyl, Cl oder NO₂.

Die 1:2-Chromkomplexfarbstoffe der Formel (I) liegen vorzugsweise in einer Reinheit von mindestens 90 %, vorzugsweise von 90 bis 95 %, vor.

Bevorzugte Farbstoffe sind solche der Formel (I) worin R¹, R², R³ und R⁴ unabhängig voneinander für C₁-C₄-Alkyl stehen, wobei ausgeschlossen ist, daß R¹/R² und/oder R³/R⁴ gleichzeitig Methyl bedeuten,.

Eine bevorzugte Auswahl von Farbstoffen der Formel (I) sind die symmetrischen 1:2-Chromkomplexfarbstoffe der Formel (II) 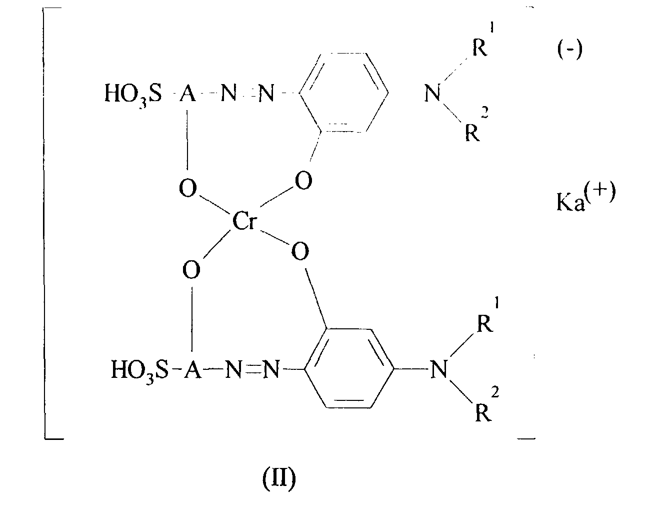 worin
- A und Ka⁽⁺⁾: die gleiche Bedeutung wie in Formel (I) haben, und
- R¹ und R²: unabhängig voneinander für C₁-C₄-Alkyl stehen, wobei ausgeschlossen ist, daß R¹/R² gleichzeitig Methyl bedeuten.

Die symmetrischen und unsymmetrischen 1:2-Chromkomplexfarbstoffe der Formel (I) können nach an sich bekannten Methoden hergestellt werden,
a) indem man einen Monoazofarbstoffder Formel (III) 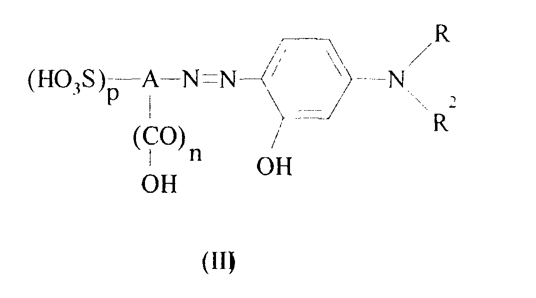 worin
   - A, p, n, R¹ und R²: die für Formel (I) angegebene allgemeine und vorzugsweise Bedeutung haben,
   oder einen Monoazofarbstoff der Formel (IV) 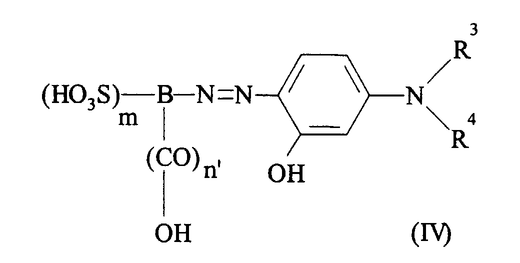 worin
   - B, m, n', R³ und R⁴: die für Formel (I) angegebene allgemeine und vorzugsweise Bedeutung haben,
   mit einem chromabgebenden Mittel in den jeweils symmetrischen 1:2-Chromkomplexfarbstoff überführt,
b) indem man unter den gleichen Bedingungen wie bei a) ein Gemisch aus jeweils einem Monoazofarbstoff der Formel (III) und (IV) mit einem chromabgebenden Mittel metallisiert und dabei ein Gemisch aus den beiden symmetrischen 1:2-Chromkomplexfarbstoffen und dem unsymmetrischen 1:2-Chromkomplexfarbstoff erhält. Bei diesem Verfahren kann das molare Verhältnis der beiden verschiedenen zu metallisierenden Farbstoffe in weiten Grenzen schwanken, beispielsweise vom Verhältnis 1:9 bis zum Verhältnis 9:1. Und schließlich
c) indem man einen Azofarbstoff der Formel (III) oder (IV) mit einem chromabgebenden Mittel in den entsprechenden 1:1-Chromkomplex überführt und an diesen einen metallfreien Farbstoff der Formel (IV) bzw. (III) anlagert und dabei in beiden Fällen einen einheitlichen unsymmetrischen 1:2-Chromkomplexfarbstoff erhält.

Die vorliegende Erfindung betrifft weiterhin Mischungen der 1:2-Chromkomplexfarbstoffe der Formel (I), insbesondere solche Mischungen der symmetrischen und des unsymmetrischen 1:2-Chromkomplexfarbstoffes, wie sie nach dem unter b) beschriebenen Verfahren erhältlich sind.

Die Azoverbindungen der Formeln (III) und (IV) können in bekannter Weise durch Kuppeln von diazotierten Aminen der Formeln (V) bzw. (VI) 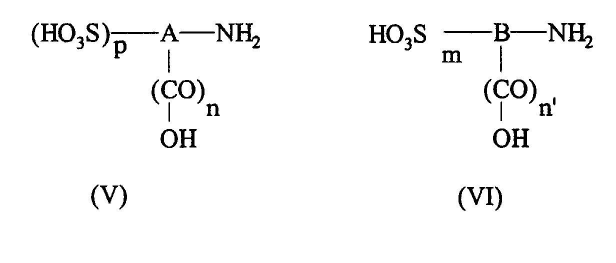 auf N-substituierte m-Aminophenole der Formel (VII) bzw. (VIII) 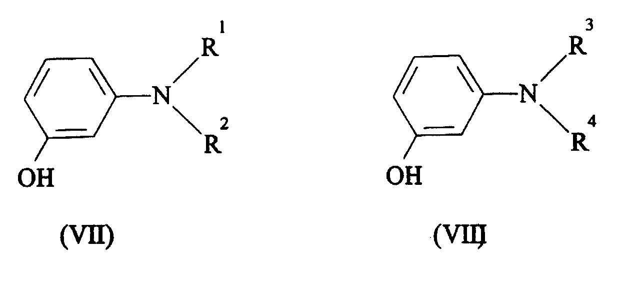 erhalten werden, wobei in den oben angegebenen Formeln die Substituenten A, B, R¹, R², R³, R⁴ und die Indices p, m, n und n' die für Formel (I) angegebenen Bedeutungen haben.

Als Amine der Formeln (V) und (VI) kommen beispielsweise in Betracht: 2-Aminobenzoesäure, 2-Aminobenzoesäure-4- oder -5-sulfonsäure, 2-Aminobenzoesäure-4- oder -5-sulfonamid, 4-, 5- oder 6-Chlor-2-aminobenzoesäure, 4- oder 5-Nitro-2-aminobenzoesäure, 2-Aminophenol, 4- oder 5-Chlor-2-aminophenol, 4,6-Dichlor-2-aminophenol, 4- oder 5-Chlor-2-aminophenol, 4,6-Dinitro-2-aminophenol, 4-Chlor-, 4-Methyl- oder 4-Acetamino-6-nitro-2-aminophenol, 6-Chlor-, 6-Methyl- oder 6-Acetamino-4-nitro-2-aminophenol, 6-Acetamino-4-chlor-2-aminophenol, 4-Chlor-5-nitro-2-aminophenol, 4- oder 5-Methyl-2-aminophenol, 4-Methoxy-2-aminophenol, 2-Aminophenol-4- oder -5-sulfonsäure, 2-Aminophenol-4- oder -5-methylsulfon, 2-Aminophenol-4- oder -5-phenylsulfon, 2-Aminophenol-4- oder -5-sulfonamid, 2-Aminophenol-4- oder -5-sulfanilid, 2-Aminophenol-4-methyl-, -4-nitro-,-4-chlor- oder -4-acetamino-6-sulfonsäure, 2-Aminophenol-6-nitro-, -6-chlor- oder -6-acetamino-4-sulfonsäure, 4-Nitro-2-aminophenol-5-sulfonsäure, 4-Nitro-2-aminophenol-5- oder -6-sulfonamid, 5-Nitro-2-aminophenol-4-sulfonsäure, 4-Methyl-2-aminophenol-5-sulfonsäure, 1-Amino-2-hydroxynaphthalin-4-, -5-, -6-, -7- oder -8-sulfonsäure, 2-Amino-1-hydroxynaphthalin-4-sulfonsäure, 1-Amino-2-hydroxynaphthalin-6-nitro- oder -6-acetamino-4-sulfonsäure.

Geeignete m-Aminophenoie der Formel (VII) und (VIII) sind beispielsweise: m-Aminophenol, N,N-Diethyl-, N,N-Dipropyl- oder N,N-Dibutyl-m-aminophenol, N-Ethyl-, N-Phenyl- oder N-Benzyl-m-aminophenol, N-Phenyl-N-ethyl-m-aminophenol.

Die Ausbeuten der Azofarbstoffe der Formel (III) oder (IV) können durch Kuppeln in einer Inertgasatmosphäre deutlich erhöht werden. Ein weiterer Gegenstand der vorliegenden Erfindung ist daher ein Verfahren zur Herstellung von Azofarbstoffen der Formel (III) 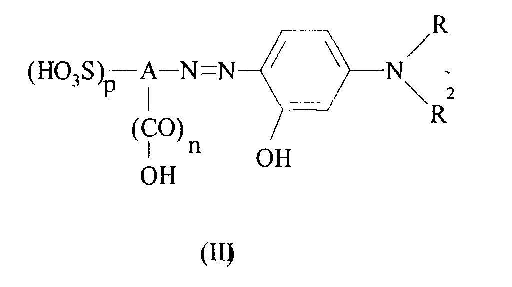 worin
- A, p, n, R¹ und R²: die für Formel (I) angegebenen Bedeutungen haben,
dadurch gekennzeichnet, daß man ein diazotiertes Amin der Formel (V) in einer Inertgasatmosphäre bei Temperaturen von 10 bis 50°C, vorzugsweise 20 bis 30°C, in wäßrigem Medium, gegebenenfalls in Gegenwart eines organischen, mit Wasser mischbaren Lösungsmittels, bei pH 8 bis 12, vorzugsweise 10 bis 11, auf eine Verbindung der Formel (VII) kuppelt.

Als Inertgas kommen vorzugsweise Stickstoff und Argon und als Lösungsmittel vorzugsweise Carbonamide wie N-Methylpyrrolidon, Glykole wie Ethylen- oder Propylenglykol sowie deren Mono-C₁-C₄-alkylether wie Ethylglykol oder 1-Ethoxy-2-propanol in Frage. Vorzugsweise findet das erfindungsgemäße Verfahren Verwendung zur Herstellung von Kupplungsprodukten aus l-Diazo-6-nitro-2-naphthol-4-sulfonsäure oder l-Diazo-2-naphthol-4-sulfonsäure und Aminen der Formel (VII). In diesem Fall werden beim Kuppeln unter Inertgasatmosphäre nahezu quantitative Ausbeuten erzielt.

Aus dem Stand der Technik sind bereits Verfahren zur Herstellung von Azofarben durch Kupplung unter Inertgasatmophäre bekannt, wobei jedoch stets größere Mengen von Natrium- und/oder Kaliumchlorid, Zinksalzen oder Ammoniumsalzen zugegen sein müssen (vgl. US 4 996 303; EP-A 0 320 446; EP-A 0 320 447).

Die Überführung der Azoverbindungen der Formel (III) oder (IV) in die symmetrischen 1:2-Chromkomplexfarbstoffe oder die Überführung eines Gemisches von Azoverbindungen der Formel (III) und (IV) in Gemische eines unsymmetrischen und seiner beiden symmetrischen 1:2-Chromkomplexfarbstoffe erfolgt mit Hilfe von chromabgebenden Mitteln, gegebenenfalls in Gegenwart von alkalisch wirkenden Mitteln bei einem pH-Wert von 4 bis 10, vorzugsweise 5 bis 8, und bei Temperaturen von 80 bis 145°C, vorzugsweise 100°C. Als metallabgebende Mittel kommen hauptsächlich die Chromsalze von anorganischen oder organischen Säuren in Frage, beispielsweise Chromchlorid, -fluorid, -sulfat, -acetat, -formiat, Kalium- oder Ammoniumchromsulfat, Chromsalicylsäure, ferner Chromtrioxid und Natrium- oder Kaliumchromat bzw. -bichromat.

Die Überführung der Azoverbindungen der Formel (III) oder (IV) in die 1:1-Chromkomplexe erfolgt im allgemeinen mit Hilfe von Salzen des dreiwertigen Chroms, wie beispielsweise Chromfluorid, -chlorid, -sulfat oder -formiat, in wäßrigem Medium bei Siedetemperatur oder gegebenenfalls höheren Temperaturen bis 145°C.

Die sich anschließende Umsetzung eines so hergestellten 1:1-Chromkomplexes mit einer metallfreien Azoverbindung der Formel (IV) bzw. (III) erfolgt zweckmäßigerweise in schwach saurem bis schwach alkalischem Medium bei Raumtemperatur oder einer höheren Temperatur bis 120°C, vorzugsweise im Bereich von 50 bis 100°C. Die bei der Anlagerung der metallfreien Azoverbindung an den 1:1-Chromkomplex freiwerdende Säure wird durch Zusatz alkalisch wirkender Mittel unter Einhalten des obengenannten pH-Bereiches abgefangen.

Geeignete alkalisch wirkende Mittel sind beispielsweise die Hydroxide und Carbonate von Alkalimetallen, wie Lithium-, Natrium- oder Kaliumhydroxid oder -carbonat, Ammoniak oder die ein-, zwei-, drei- oder viermal niedrigalkylsubstituierten Ammoniumhydroxide, wie Mono-, Di- oder Triethylammoniumhydroxid, Mono-, Di- oder Tri(2-hydroxyethyl)ammoniumhydroxid oder Tetramethylammoniumhydroxid.

Die hier beschriebenen Umsetzungen zu den symmetrischen und unsymmetrischen 1:2-Chromkomplexverbindungen können zur Beschleunigung der Reaktion auch in Gegenwart von hydrotropen Mitteln, wie beispielsweise Harnstoff oder 6-Caprolactam, oder in Gegenwart von organischen Lösungsmitteln durchgeführt werden. Geeignete Lösungsmittel sind beispielsweise niedere Alkohole, wie Ethanol, Ketone, wie Ethylmethylketon, Carbonamide, wie Formamid, Dimethylformamid, N-Methylpyrrolidon, Glykole, wie Ethylen-, Propylenglykol, oder vorzugsweise deren Mono-C₁-C₄-alkylether, wie Ethylglykol, 1-Ethoxy-2-propanol.

Am Ende der Reaktion liegen die symmetrischen und unsymmetrischen 1:2-Chromkomplexfarbstoffe der Formel (I) als Salz der Komplexsäure und der an ihr gebundenen SO₃H-Gruppen mit den oben erwähnten alkalisch wirkenden Mitteln vor, beispielsweise als Alkalisalze bei Verwendung von Alkalihydroxiden oder -carbonaten oder als Ammoniumsalze bei Verwendung von Ammoniak, Aminen oder Tetraalkylammoniumhydroxiden oder als ein gemischtes Salz der genannten Kationen. Bevorzugte Salze sind die Lithiumsalze oder die gemischten Lithium- und Natriumsalze.

Die so hergestellten erfindungsgemäßen symmetrischen und unsymmetrischen 1:2-Chromkomplexfarbstoffe der Formel (I) können durch Aussalzen mit Alkalisalzen, Eindampfen auf der Walze oder Sprühtrocknung isoliert und mit den üblichen Stellmaterialien zu wasserlöslichen Präparationen oder zu flüssigen Farbstoffzubereitungen verarbeitet werden.

Ein weiterer Gegenstand der vorliegenden Erfindung sind flüssige Farbstoffzubereitungen, die neben üblichen Zusatzstoffen mindestens einen 1:2-Chromkomplexfarbstoff der Formel (I) enthalten. Vorzugsweise handelt es sich bei den erfindungsgemäßen flüssigen Farbstoffzubereitungen um wäßrige, gegebenenfalls ein oder mehrere organische Lösungsmittel und/oder hydrotrope Verbindungen enthaltende Lösungen.

Vorzugsweise sind in den erfindungsgemäßen flüssigen Farbstoffzubereitungen solche organischen Lösungsmittel enthalten, die in jedem Verhältnis mit Wasser mischbar sind und davon insbesondere diejenigen, die oberhalb von 70°C sieden. Geeignete Lösungsmittel sind beispielsweise in DAS 1 619 357 und DOS 2 335 512 zitiert. Bevorzugte Lösungsmittel dieser Art sind amidgruppenhaltig, wie Formamid, Dimethylformamid, Dimethylacetamid, N,N,N',N'-Tetramethylharnstoff, N-Methylpyrrolidon, 1,3-Dimethylpyrrolidon, oder stellen Glykole und Glykolether dar, wie Ethylenglykol, Di- oder Triethylenglykol, 1,2-Propylenglykol, Di- oder Tripropylenglykol, Ethylenglykolmonomethyl-, -ethyl-, -propyl- oder -isopropylether, Diethylenglykolmonomethyl-, -ethyl-, -propyl- oder -isopropylether, Triethylenglykolmonomethyl- oder -ethylether, 1-Methoxy-, 1-Ethoxy-, 1-Propoxy- oder 1-Isopropoxy-2-propanol, 2-Methoxy-, 2-Ethoxy-, 2-Propoxy- oder 2-Isopropoxy-1-propanol, Dipropylenglykolmonomethyl- oder -ethylether, Tripropylenglykolmonomethyl- oder -ethylether.

Ganz besonders bevorzugt ist 1-Ethoxy-2-propanol.

Als hydrotrope Verbindungen kommen die bereits obengenannten Verbindungen in Frage. Insbesondere geeignet sind feste hydrotrope Verbindungen wie Harnstoff, 6-Caprolactam und N-Methylcaprolactam.

Bevorzugte flüssige Farbstoffzubereitungen setzen sich zusammen aus:
(a) 5 bis 30 Gew.-% mindestens eines symmetrischen oder unsymmetrischen 1:2-Chromkomplexfarbstoffs der Formel (I),
(b) 20 bis 95 Gew.-% Wasser,
(c) 0 bis 70 Gew.-% eines oder mehrerer organischer mit Wasser in jedem Verhältnis mischbarer Lösungsmittel und
(d) 0 bis 20 Gew.-% einer hydrotropen Verbindung.

In den erfindungsgemäßen flüssigen Farbstoffzubereitungen liegen die 1:2-Chromkomplexfarbstoffe vorzugsweise als Lithiumsalze oder als gemischte Lithium- und Natriumsalze der Komplexsäuren und der an ihr gebundenen SO₃H-Gruppen vor.

Die Herstellung der erfindungsgemäßen flüssigen Farbstoffzubereitungen gelingt auf einfache Weise durch Verrühren der durch Filtration erhaltenen Pasten oder durch Eindampfen oder Sprühtrocknung erhaltenen Pulver in den obengenannten Medien bei Raumtemperatur oder Temperaturen bis zu100°C, vorzugsweise bei 40 bis 80°C. Danach schließt sich eine Klärfiltration vorzugsweise bei Raumtemperatur an. Zur Erhöhung der Lagerstabilität können die Elektrolyte der so gewonnenen Farbstofflösungen durch Membran-Trenntechniken, beispielsweise durch Ultrafiltration oder Reversosmose bei vorzugsweise 5 bis 40 bar, abgetrennt werden. Hierzu wird vorzugsweise die wäßrige Farbstofflösung der Membran-Trenntechnik unterzogen und dabei gegebenenfalls aufkonzentriert und das resultierende elektrolytarme farbstoffhaltige Konzentrat mit Wasser oder einem oder mehreren organischen Lösungsmitteln und/oder hydrotropen festen Verbindungen auf die gewünschte Farbstoffstärke eingestellt.

In den meisten Fällen braucht aber der 1:2-Chromkomplexfarbstoff der Formel (I) nicht durch Aussalzen, Eindampfen oder Sprühtrocknung isoliert und anschließend wieder gelöst zu werden. Sehr oft entstehen bereits bei den oben angeführten Chromierungsverfahren Lösungen von 1:2-Chromkomplexfarbstoffen, welche, was Konzentration und Stabilität anbelangt, die Bedingungen von Flüssigeinstellungen erfüllen.

Die festen und flüssigen Präparationen der symmetrischen und unsymmetrischen 1:2-Chromkomplexfarbstoffe der Formel (I) eignen sich zum Färben und Bedrucken von mit anionischen Farbstoffen farbbaren Substraten, insbesondere von Substraten aus amidgruppenhaltigen Materialien, wie Wolle, Seide, Leder, Pelze, Poylamid- und Polyurethanfaser. Bevorzugtes Anwendungsgebiet für die festen Präparationen ist das Färben und Bedrucken von Leder und Pelzen, für die flüssigen Präparationen das Färben und Bedrucken von Wolle, Seide, Leder, Pelzen, Polyamid- und Polyurethanfasern.

Die Ledersubstrate können mit den 1:2-Chromkomplexfarbstoffen der Formel (I) nach verschiedenen, an sich bekannten Methoden gefärbt werden. Dabei eignen sich die festen Präparationen vornehmlich zum Färben im Faß, während die flüssigen Präparationen neben der Faßfärbung auch zum Färben auf Durchlaufmaschinen, zum Anfärben von Appreturen und Zurichtflotten und vor allem zum Spritzfärben mit und ohne Appretur geeignet sind. Als Ledersubstrat kommen beliebige Ledersorten in Frage, insbesondere Narbenleder, Veloursleder, Spaltvelours, Wildleder, Nubukleder verschiedener Provenienz, insbesondere von Rind, Kalb, Ziege, Schwein, Schaf. Die Leder können beliebig gegerbt sein, z.B. vegetabilisch, mineralisch, synthetisch oder kombiniert, und zusätzlich noch mit üblichen, insbesondere vegetabilischen, mineralischen oder synthetischen Gerbstoffen nachgegerbt sein.

Infolge der mannigfaltigen Gerbung mit Gerbstoffen unterschiedlich anionischen Charakters resultieren Leder mit mannigfaltig unterschiedlicher Affinität gegenüber anionischen Farbstoffen. Die Farbstoffe der Formel (I) ziehen bevorzugt aus wäßrigem Bad unter den an sich bekannten Temperatur- und pH-Bedingungen auch auf weniger farbstoffaffine Leder noch gut auf. Sie färben egal und weisen bei zunehmendem Farbstoffangebot ein gutes Aufbauvermögen auf, ohne daß es zu unerwünschten Broncierungseffekten kommt.

Die auf den obengenannten Substraten, im Nuancenbereich von Rot bis Blau liegenden Färbungen sind licht- und naßecht. Die Lederfärbungen zeichnen sich neben einer guten Licht- und Schweißechtheit vor allem durch eine gute Diffusionsechtheit aus.

Ein weiterer Vorteil der 1:2-Chromkomplexfarbstoffe der Formel (I) sowie deren Mischungen, insbesondere deren durch Mischchromierung gemäß Verfahren b) erhältlichen Mischungen, ist deren gute Kombinierbarkeit mit bekannten Farbstoffen wie z.B. den im allgemeinen braunen Farbstoffen der Deutschen Offenlegungsschrift 3 121 923, wie sie dort unter der Formel (I) definiert sind, den roten Farbstoffen der EP-A 532 994 oder den gelben Farbstoffen der Formel (IX) 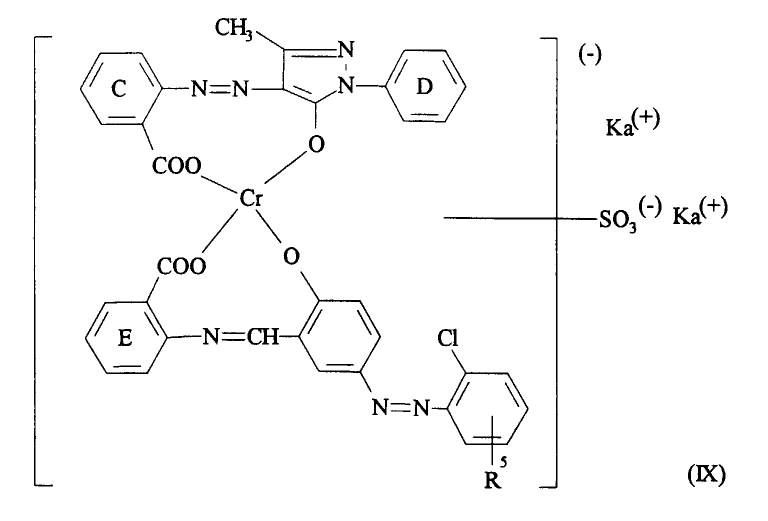 worin R⁵ für Wasserstoff, Cl, OCH₃, SO₂NH₂ oder CH₃ und Ka⁽⁺⁾ für ein Kation steht, die SO₃⁽⁻⁾ Ka⁽⁺⁾-Gruppe an Ring C, D oder E gebunden ist, und die Ringe C und D gegebenenfalls ein- bis dreimal gleich oder verschieden durch Cl, NO₂, CH₃, Aminosulfonyl, C₁-C₄-(Di)-alkylaminosulfonyl oder C₁-C₄-Alkylcarbonylamino substituiert sind.

Die gelben Farbstoffe der Formel (IX) sind Gegenstand einer eigenen älteren deutschen Anmeldung Nr. P 42 24 558.

Die gute Kombinierbarkeit macht sich besonders beim Färben von Leder günstig bemerkbar. So zeigen derartige Farbstoffgemische bei Unterschieden im Farbstoffangebot, in der Applikation und im Ledertyp keine nennenswerten Abweichungen in der Nuance, und auch beim Anschleifen der gefärbten Leder ist praktisch kein Farbunterschied zwischen der Oberfläche und den darunter liegenden Schichten zu erkennen.

Diese Nuancenkonstanz ist vor allem bei grünen Färbungen von Interesse. Ein weiterer Gegenstand der vorliegenden Erfindung sind daher grün- bis olivfarbende Gemische, enthaltend einen blauen Farbstoff der Formel (X) 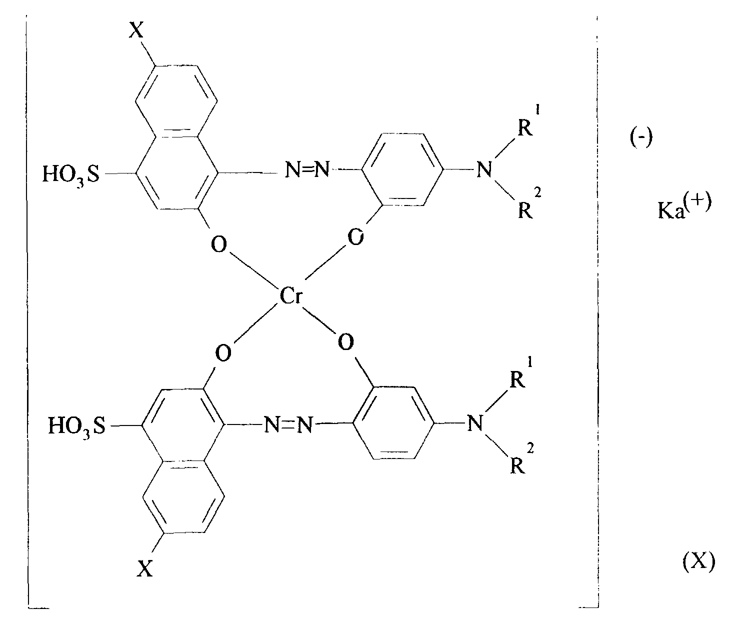 worin
- R¹, R²: unabhängig voneinander für Wasserstoff, Alkyl, Aryl oder Aralkyl stehen und Ka⁽⁺⁾ die gleiche Bedeutungen hat wie bei Formel (I) angegeben, und
- X: für Wasserstoff oder Nitro steht,
und einen gelben Farbstoff der Formel (IX).

Aufgrund der guten Kombinierbarkeit der blauen Farbstoffe der Formel (X) sowohl mit den gelben Farbstoffen der Formel (IX) als auch mit den in der EP-A 532 994 beschriebenen roten Farbstoffen der Formel (XI) 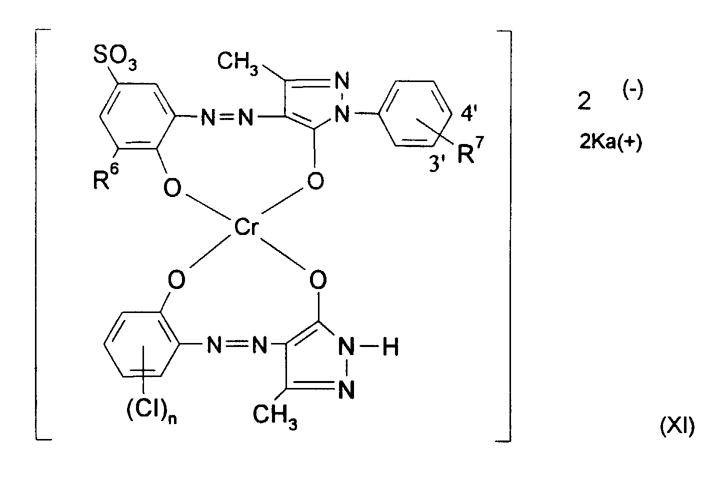 worin
- R⁶: für Wasserstoff, Chlor oder Nitro,
- R⁷: für Alkyl, welches in 3'- oder 4'-Stellung des Phenylringes gebunden ist,
- n: für 1 oder 2 steht, und
- Ka⁽⁺⁾: für ein Kation steht
ist es möglich, auch mit Mischungen aus drei Farbstoffen in den Grundfarben Gelb, Rot und Blau zu färben. Durch Herstellung solcher Mischungen erhält man ein Trichromie-Farbsystem, mit dem man je nach Mengenverhältnis der drei Komponenten ein breites Nuancenspektrum erzielen kann.

Besonders die in der Lederindustrie häufig verwendeten Brauntöne können mit diesem System in vielfältigen Schattierungen eingestellt werden.

Weiterer Gegenstand der vorliegenden Erfindung sind daher Farbstoffmischungen, enthaltend einen blauen Farbstoff der Formel (X), einen gelben Farbstoff der Formel (IX) und einen roten Farbstoff der Formel (XI) sowie ein Verfahren zum Trichromiefärben von Leder mit der genannten Dreiermischung.

Aus JP-52-138 526 und JP-53-08 622 sind bereits Verfahren zur Herstellung von 1:2-Chromkomplexfarbstoffen durch Umsetzung von zwei bestimmten Azofarbstoffen mit einem Chromierungsreagenz bekannt. In beiden Fällen entstehen Mischungen aus den beiden symmetrischen Chromkomplexfarbstoffen und dem unsymmetrischen Chromkomplexfarbstoff.

In der Deutschen Patentschrift DRP 740 049 ist ein Verfahren zur Herstellung metallhaltiger Farbstoffe beschrieben, die sich teilweise von Azofarbstoffen der Formel (III) oder (IV) ableiten. In diesem Falle gelangt man aber bei der Chromierung zu den entsprechenden 1:1-Chromkomplexfarbstoffen, die im Eigenschaftsprofil nicht mit den 1:2-Chromkomplexfarbstoffen der Formel (I) übereinstimmen.

### Beispiele

### Beispiel 1

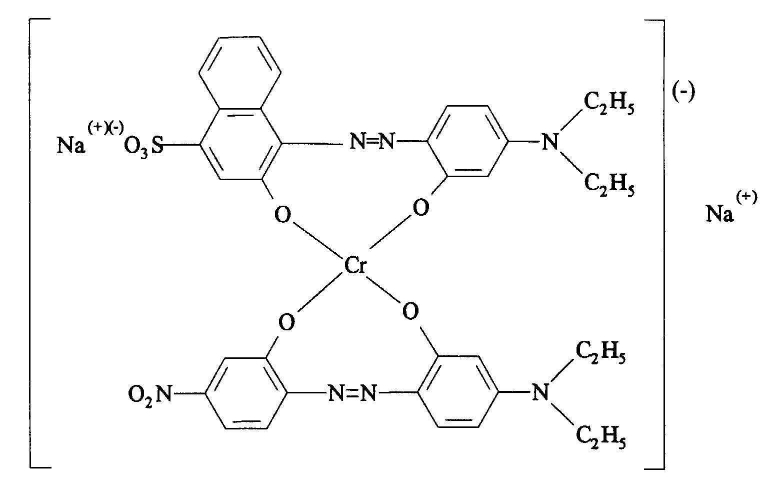

0,1 Mol 1:1-Chromkomplex des Farbstoffes aus 1-Diazo-2-naphthol-4-sulfonsäure und 3-(N,N-Diethylamino)phenol und 0,1 Mol des Farbstoffes aus diazotiertem 5-Nitro-2-aminophenol und ebenfalls 3-(N,N-Diethylamino)phenol werden in 500 ml Wasser eingetragen und gut miteinander verrührt. Der pH wird durch Zugabe von 5 N Natronlauge auf 7,5 gestellt und die Temperatur durch Erwärmen des Gemisches im Verlauf von etwa 45 Minuten auf 80°C angehoben, wobei durch weiteres Zutropfen von 5 N Natronlauge der pH-Wert bei 7,5 bis 8,0 gehalten wird. Bei Erreichen von 80°C entsteht eine tiefblaue Lösung, die noch etwa eine Stunde lang bei pH 7,5 bis 8,0 und 80°C gerührt wird, bis sich die beiden Ausgangsverbindungen vollständig zum 1:2-Chrommischkomplex umgesetzt haben. Nachdem das Wasser am Rotationsverdampfer abgetrennt ist, erhält man ein schwarzes Pulver, welches Wolle, Polyamid und Leder in einem blauen Farbton mit guten Echtheiten färbt.

### Beispiele 2 bis 14

Arbeitet man wie in Beispiel 1 beschrieben, verwendet jedoch 1:1-Chromkomplexe von Azofarbstoffen (1), die in der folgenden Tabelle 1 in Spalte 2 aufgeführt sind, und als metallfreie Reaktionspartner stöchiometrische Mengen der in Spalte 3 stehenden Azofarbstoffe (2), so erhält man wertvolle 1:2-Chromkomplexfarbstoffe, die Wolle, Polyamid und Leder in bordeauxfarbenen bis blauen Tönen mit guten Echtheiten färben. Die Nuance der Färbungen ist in Spalte 4 angegeben.

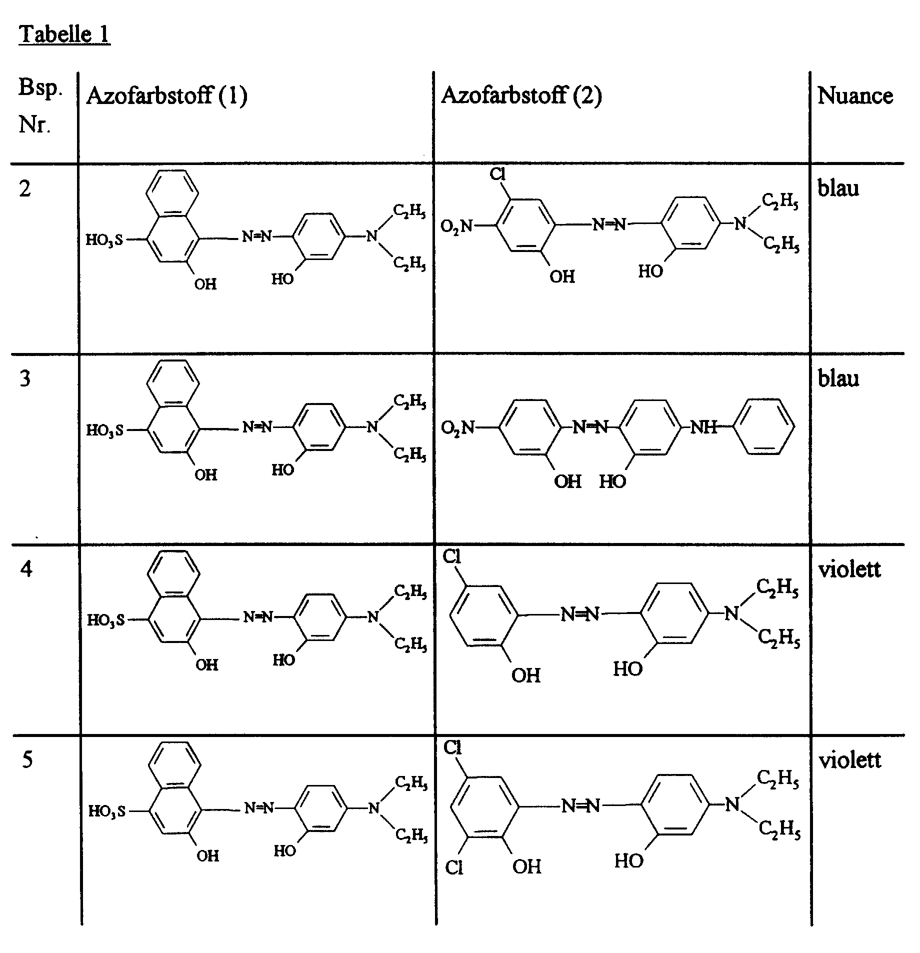

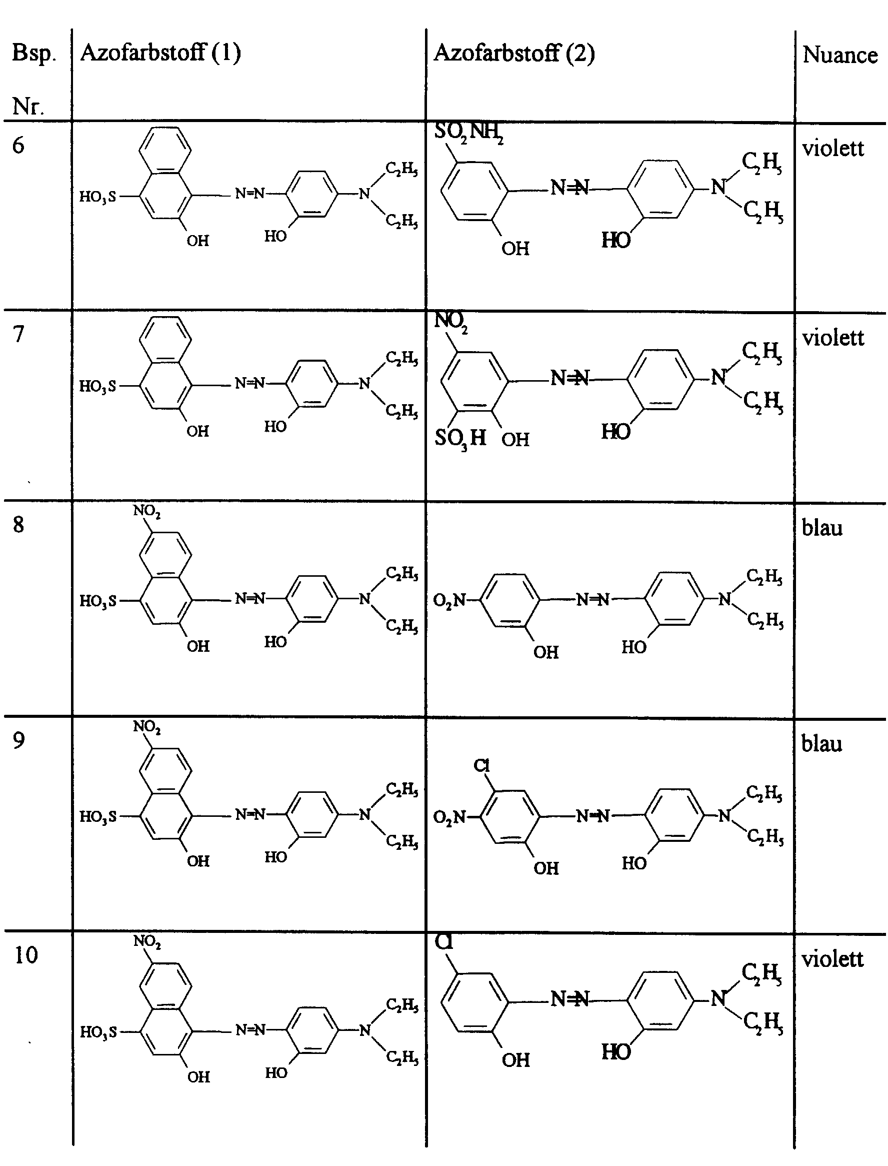

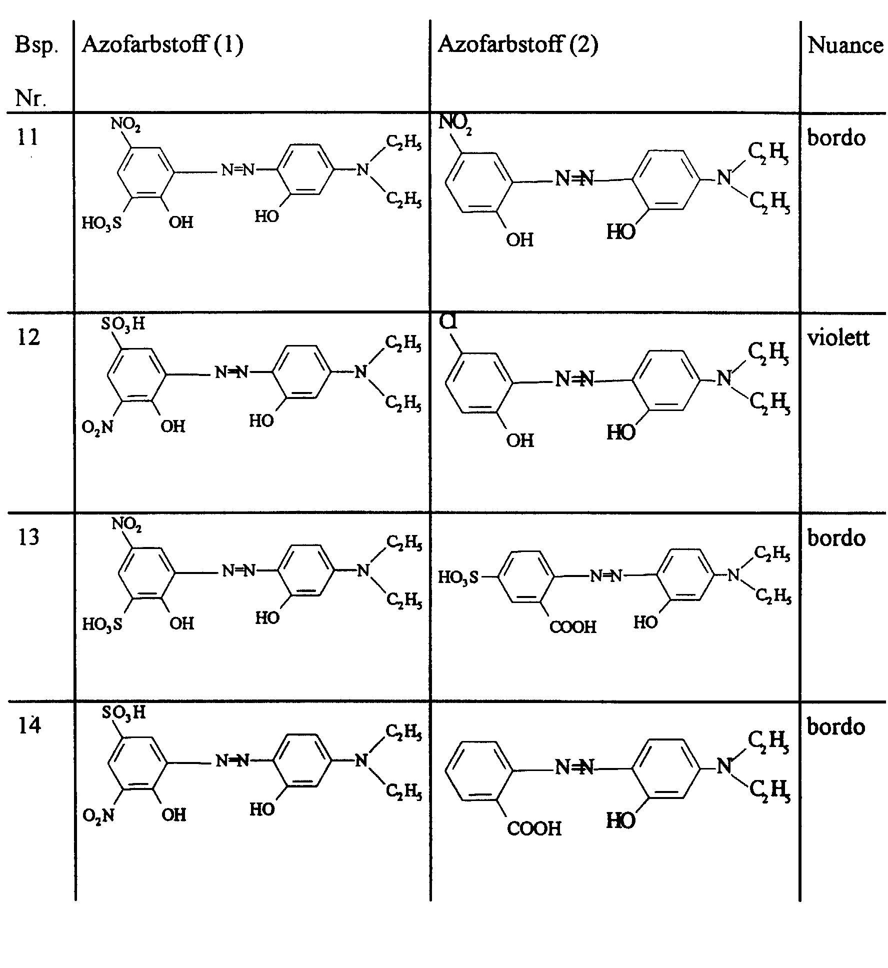

### Beispiel 15

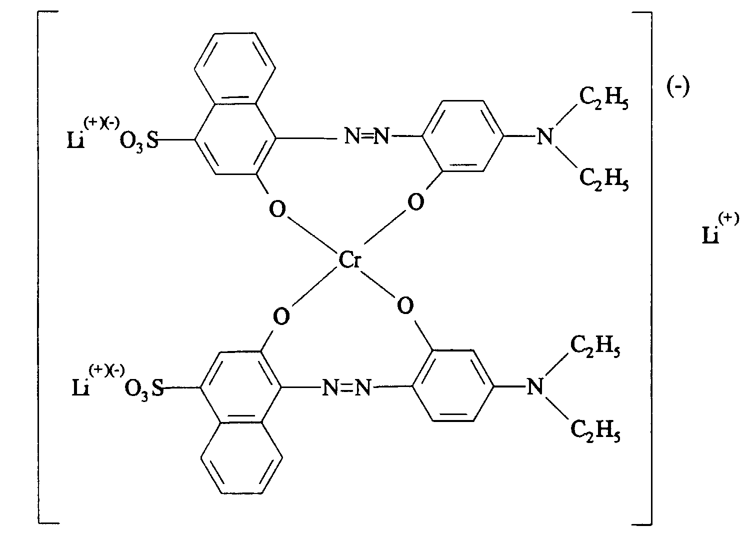

1 Mol 1-Diazo-2-naphthol-4-sulfonsäure wird in 1 200 ml Wasser durch Zugabe von etwa 250 ml einer 5 N Natronlauge gelöst. In einer anderen fortan unter Stickstoff stehenden Apparatur wird 1 Mol 3-Diethylaminophenol in eine auf 50°C erwärmte Lösung von 37 g LiOH·H₂O 320 ml in Wasser eingetragen. Nach kurzer Zeit entsteht wiederum eine Lösung, die nach Abkühlen auf 30 bis 25°C bei dieser Temperatur innerhalb einer Stunde mit der Lösung der 1-Diazo-2-naphthol-4-sulfonsäure versetzt wird. Die Kupplung ist nach ca. einstündigem Nachrühren beendet. Die Kupplungsausbeute beträgt etwa 97 % der Theorie.

Anschließend werden 116 g basisches Chrom(III)-acetat (33 Gew.-% Cr₂O₃) zugegeben. Das Gemisch wird nun, wobei der Stickstoffstrom abgestellt werden kann, auf 100°C erwärmt und etwa zwei Stunden bei dieser Temperatur gehalten, bis mittels dünnschichtchromatographischer Untersuchung festgestellt wird, daß der Ausgangsfarbstoff vollständig chromiert ist. Nach Abkühlen auf 50°C wird der pH mit ca. 50 g LiOH · H₂O auf 7,0 gestellt.

Aus der erhaltenen Lösung kann der 1:2-Chromkomplexfarbstoff durch Sprühtrocknung als schwarzes Pulver gewonnen werden, welches Wolle, Polyamid und Leder in blauen Tönen färbt. Die Lösung kann andererseits durch Anwendung einer Ultrafiltration entsalzt und aufkonzentriert und durch Zusatz von 10 bis 30 Gew.-% Ethylglykol oder 1-Ethoxy-2-propanol in eine lagerstabile Flüssigmarke überführt werden. In diesem Fall erhält man durch Tauch- oder Spritzfärbung ebenfalls blaue Lederfärbungen mit guten Echtheiten.

### Beispiele 16 bis 21

Verfährt man analog, wie unter Beispiel 15 beschrieben, verwendet aber die in der folgenden Tabelle 2 aufgeführten Diazonaphthol-Derivate und die danebenstehenden Kupplungskomponenten, so erhält man weitere blaue 1:2-Chromkomplexfarbstoffe mit den unter Beispiel 15 genannten Anwendungsmöglichkeiten.

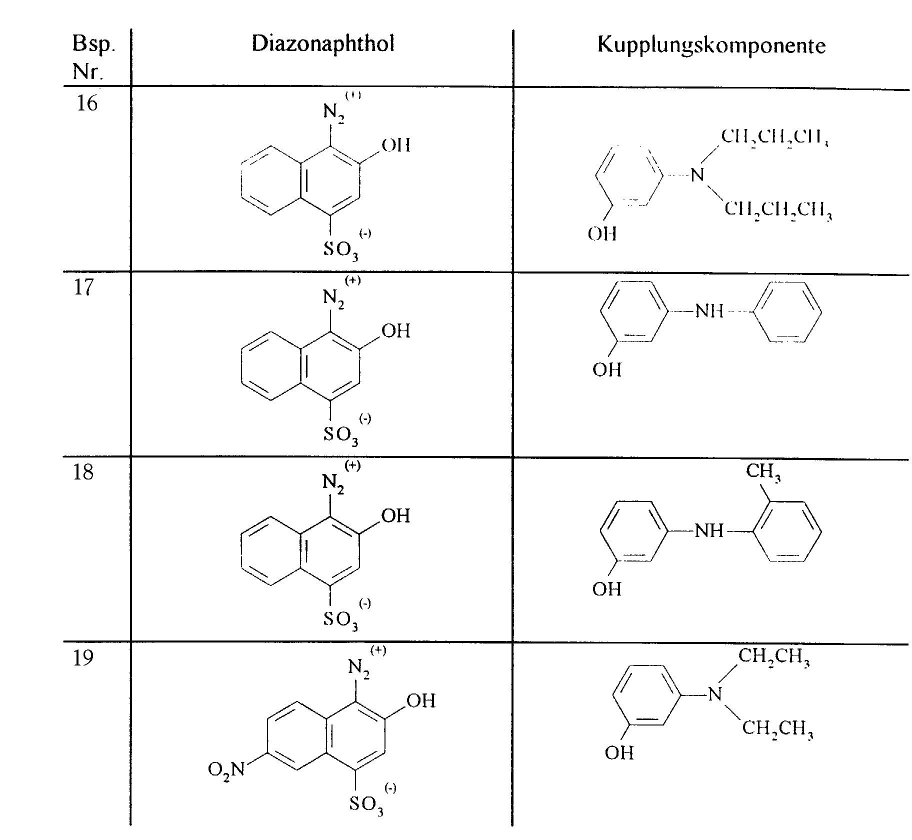

### Beispiel 20

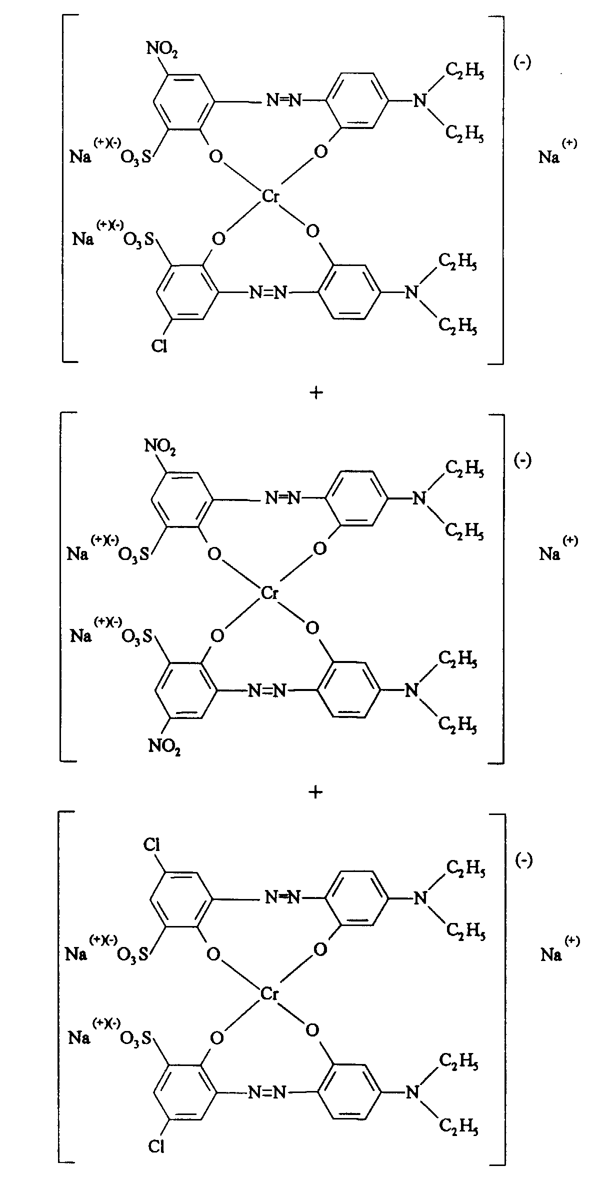

Je 0,1 Mol der beiden Azofarbstoffe aus diazotierter 4-Nitro-2-aminophenol-6-sulfonsäure und 3-Diethylaminophenol als Kupplungskomponente und aus diazotierter 4-Chlor-2-aminophenol-6-sulfonsäure und der gleichen Kupplungskomponente werden in 500 ml Wasser miteinander verrührt. Man fügt 23 g basisches Chrom(III)acetat (33 Gew.-% Cr₂O₃) hinzu, erwärmt das Gemisch auf 100°C und rührt etwa zwei Stunden bei dieser Temperatur, bis im Dünnschichtchromatogramm keine der beiden Ausgangsverbindungen mehr zu sehen ist. Die erhaltene Lösung wird nach Abkühlen auf 60°C durch Zutropfen von ca. 24 ml 5 N Natronlauge auf pH 7,0 gestellt und auf dem Wasserbad zur Trockne eingeengt. Der trockene Rückstand stellt nach dem Mahlen ein schwarzes Pulver dar, welches auf Wolle, Polyamid und Leder violette Färbungen liefert.

### Beispiel 21 bis 26

Auf die unter Beispiel 20 angegebene Weise werden durch gemeinsame Chromierung zweier Azofarbstoffe Gemische von anderen wertvollen 1:2-Chromkomplexfarbstoffen gewonnen, wenn man dabei von den metallisierbaren Farbstoffen (1) und (2) der folgenden Tabelle 3 ausgeht. Die Farbstoffe werden im allgemeinen in äquimolaren Mengen eingesetzt. Das molare Verhältnis kann aber auch ohne große Auswirkung auf die Endprodukte in den Grenzen von 2:1 bis 1:2 schwanken. Die Nuance der metallisierten Produkte beim Färben auf Leder, Wolle und Polyamid geht aus der letzten Spalte der Tabelle hervor.

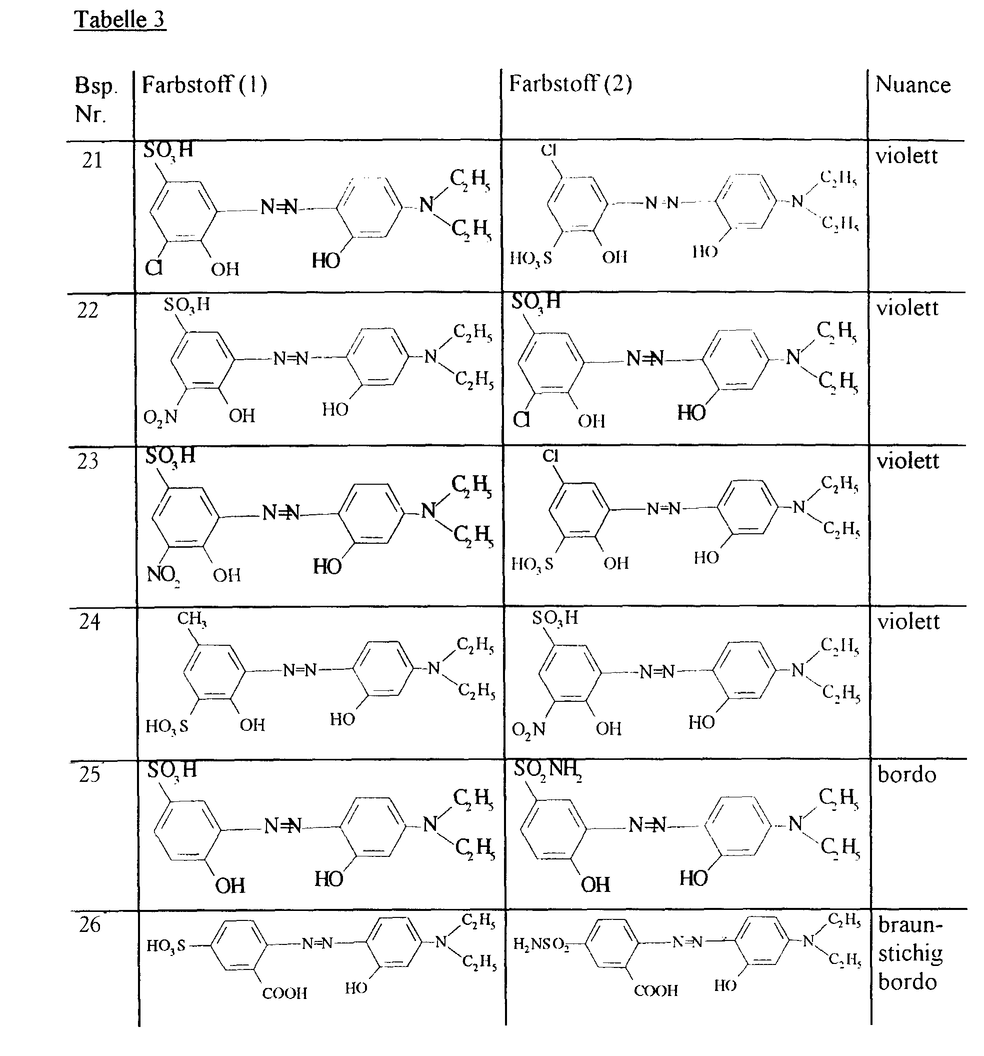

### Beispiel 27

0,1 Mol blauer 1:2-Chromkomplexfarbstoff der Formel 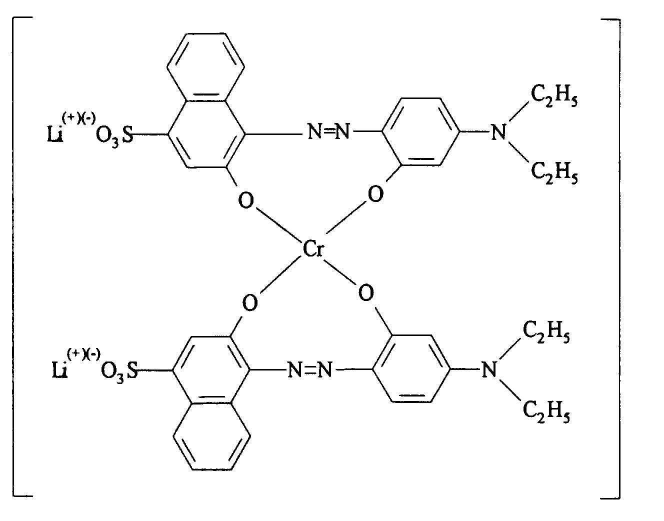 und 0,16 Mol gelber 1:2-Chromkomplexfarbstoff der Formel 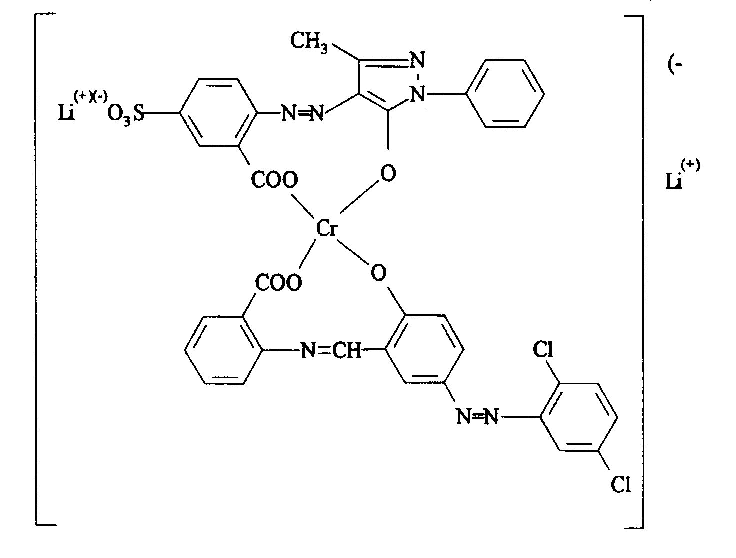 werden in einem Liter Wasser und 400 ml 1-Ethoxypropanol bei 50°C gelöst. Man läßt auf Raumtemperatur abkühlen, filtriert über ein Papierfilter und erhält eine dunkelgrüne konzentrierte und lagerstabile Farbstofflösung. Mit dieser Lösung erzielt man auf Ledern unterschiedlicher Gerbung bei der Faß-, Tauch- oder Spritzfärbung gleichmäßige olivgrüne Färbungen, die untereinander in keinem Fall eine signifikante Gelb- oder Blauverschiebung aufweisen.

### Beispiel 28

0,1 Mol brauner 1:2-Chromkomplexfarbstoff der Formel 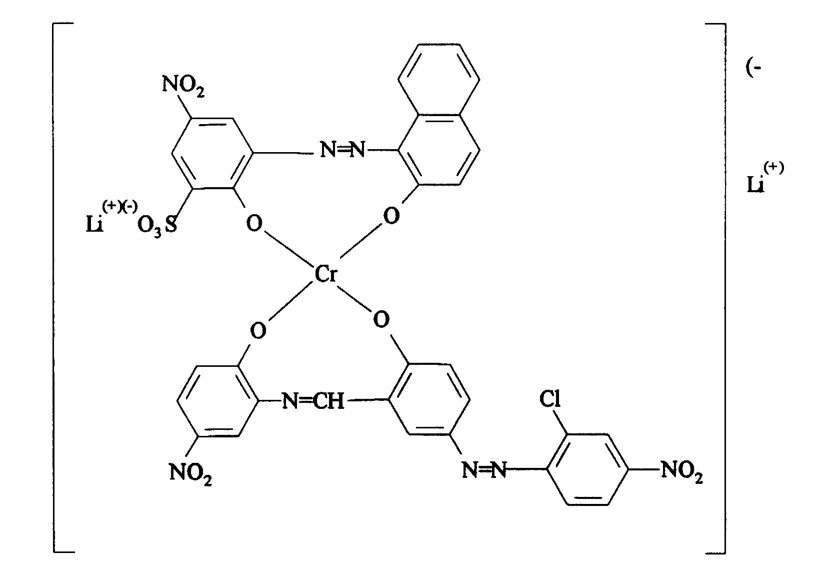 und 0,5 Mol blauer 1:2-Chromkomplexfarbstoff des vorangehenden Beispiels 27 werden durch Erwärmen in 900 ml Wasser und 400 ml 1-Ethoxy-2-propanol bei 50°C gelöst. Die nach dem Klären bei Raumtemperatur anfallende schwarze konzentrierte Lösung ist über mehrere Monate hin beständig. Sie liefert auf unterschiedlich gegerbten Ledern bei den unter Beispiel 30 angegebenen Applikationen echte Färbungen in schwarzbraunen Nuancen, die von Färbung zu Färbung ebenfalls sehr gleichmäßig sind.

## Patentansprüche

1. 1 :2-Chromkomplexfarbstoffe der Formel (I) 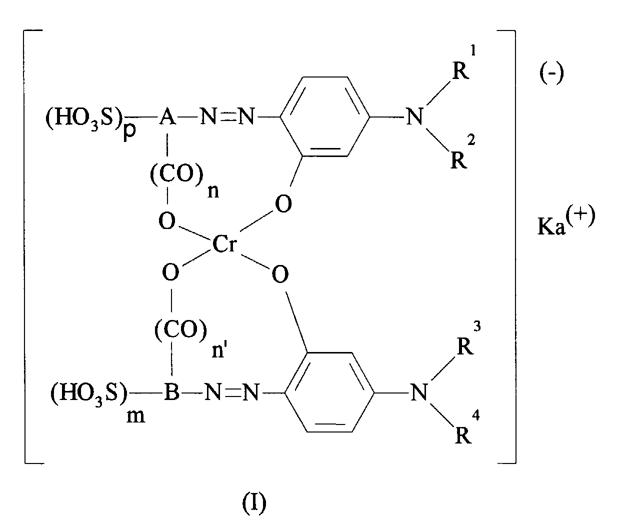 worin
A und B unabhängig voneinander für den Rest eines jeweils gegebenenfalls substituierten Benzol- oder Naphthalinringes stehen, wobei sich jeweils die komplexbildende Gruppe in o-Stellung zur Azogruppe befindet, und
R¹, R², R³ und R⁴ unabhängig voneinander für Wasserstoff, Alkyl, Aryl oder Aralkyl stehen, wobei ausgeschlossen ist, daß R¹/R² und/oder R³/R⁴ gleichzeitig Methyl bedeuten,
n, n', p und m unabhängig voneinander für die Zahl 0 oder 1 stehen, wobei die Summe aus p und m 1 oder 2 ist, und
Ka⁽⁺⁾ für ein Kation steht.

2. Farbstoffe gemäß Anspruch 1 der Formel (I) worin R¹, R², R³ und R⁴ unabhängig voneinander für C₁-C₄-Alkyl stehen, wobei ausgeschlossen ist, daß R¹/R² und/oder R³/R⁴ gleichzeitig Methyl bedeuten,

3. Symmetrische 1:2-Chromkomplexfarbstoffe gemäß Anspruch 1 der Formel (II) 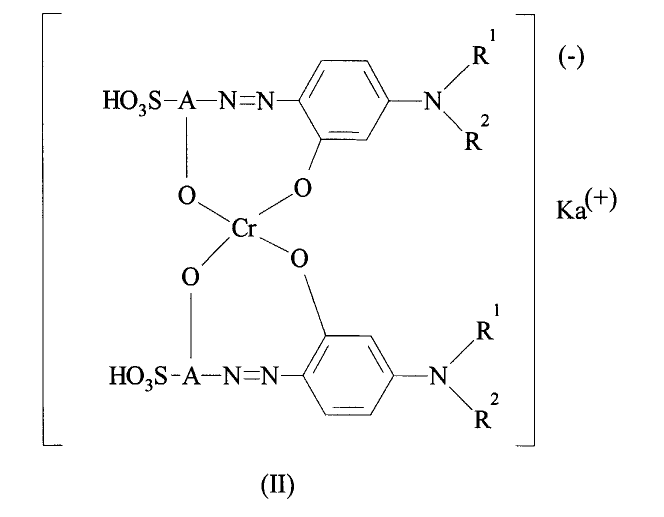 worin
A und Ka⁽⁺⁾ die in Anspruch 1 angegebene Bedeutung haben, und
R¹ und R² unabhängig voneinander für C₁-C₄-Alkyl stehen, wobei ausgeschlossen ist, daß R¹/R² gleichzeitig Methyl bedeuten.

4. Mischungen der 1:2-Chromkomplexfarbstoffe des Anspruchs 1, enthaltend mindestens zwei 1:2-Chromkomplexfarbstoffe der Formel (I).

5. Verfahren zur Herstellung von Azofarbstoffen der Formel (III) 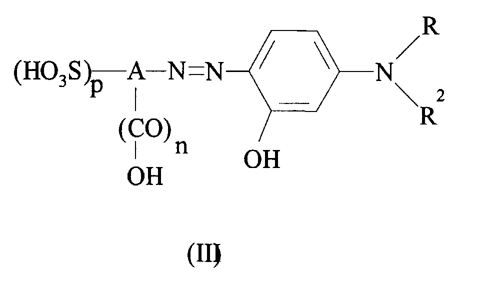 worin A, p, n, R¹ und R² die in Anspruch 1 angegebenen Bedeutungen haben,
dadurch gekennzeichnet, daß man ein diazotiertes Amin der Formel (V) 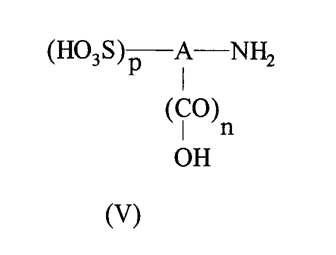 in einer Inertgasatmosphäre bei Temperaturen von 10 bis 50°C, vorzugsweise 20 bis 30°C, in wäßrigem Medium, gegebenenfalls in Gegenwart eines organischen, mit Wasser mischbaren Lösungsmittels, bei pH 8 bis 12, vorzugsweise pH 10 bis 11, auf eine Verbindung der Formel (VII) 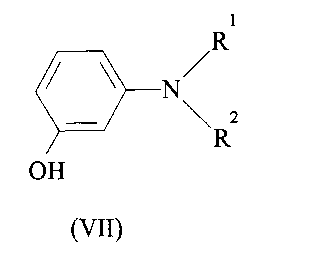 kuppelt.

6. Flüssige Farbstoffzubereitungen, dadurch gekennzeichnet, daß sie neben üblichen Zusatzstoffen mindestens einen 1 :2-Chromkomplexfarbstoff gemäß Anspruch 1 der Formel (I) enthalten.

7. Flüssige Farbstoffzubereitungen gemäß Anspruch 6, dadurch gekennzeichnet, daß sie
(a) 5 bis 30 Gew.-% mindestens eines symmetrischen oder unsymmetrischen 1:2-Chromkomplexfarbstoffs der Formel (I) gemäß Anspruch 1,
(b) 20 bis 95 Gew.-% Wasser,
(c) 0 bis 70 Gew.-% eines oder mehrerer organischer mit Wasser in jedem Verhältnis mischbarer Lösungsmittel und
(d) 0 bis 20 Gew.-% einer hydrotropen Verbindung enthalten.

8. Verfahren zum Färben und Bedrucken von mit anionischen Farbstoffen färbbaren Substraten, insbesondere von Substraten aus amidgruppenhaltigen Materialien, dadurch gekennzeichnet, daß das zu färbende Substrat mit mindestens einem 1:2-Chromkomplexfarbstoff gemäß Anspruch 1 behandelt wird.

9. Verfahren zum Spritzfärben von mit anionischen Farbstoffen färbbaren Substraten, insbesondere von Substraten aus amidgruppenhaltigen Materialien, dadurch gekennzeichnet, daß eine flüssige Farbstoffzubereitung gemäß Anspruch 7 eingesetzt wird.

10. Farbstoffmischungen, enthaltend einen blauen Farbstoff der Formel (X) 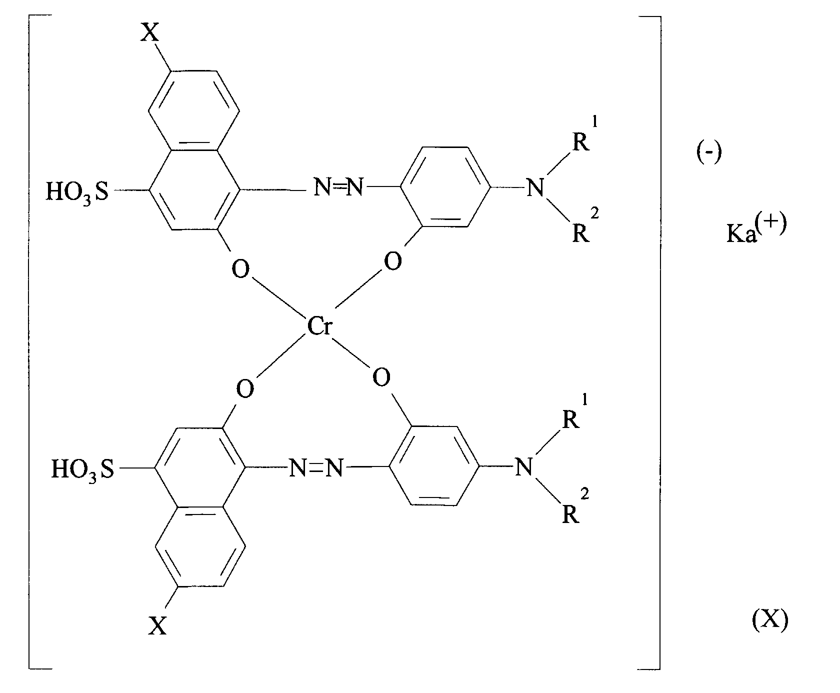 worin
R¹, R² unabhängig voneinander für Wasserstoff, Alkyl, Aryl oder Aralkyl stehen und Ka⁽⁺⁾ die in Anspruch 1 angegebene Bedeutung hat
X für Wasserstoff oder Nitro steht,
und einen gelben Farbstoff der Formel (IX) 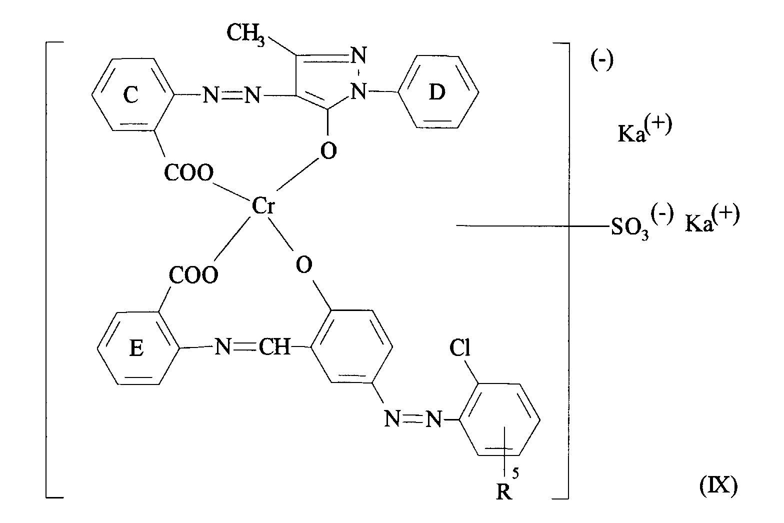 worin R⁵ für Wasserstoff, Cl, OCH₃, SO₂NH₂ oder CH₃ und Ka⁽⁺⁾ für ein Kation steht, die SO₃⁽⁻⁾ Ka⁽⁺⁾-Gruppe an Ring C, D oder E gebunden ist, und die Ringe C und D gegebenenfalls ein- bis dreimal gleich oder verschieden durch Cl, NO₂, CH₃, Aminosulfonyl, C₁-C₄-(Di)-alkylaminosulfonyl oder C₁-C₄-Alkylcarbonylamino substituiert sind.

11. Farbstoffmischung gemäß Anspruch 10, enthaltend zusätzlich einen roten Farbstoff der Formel (XI) 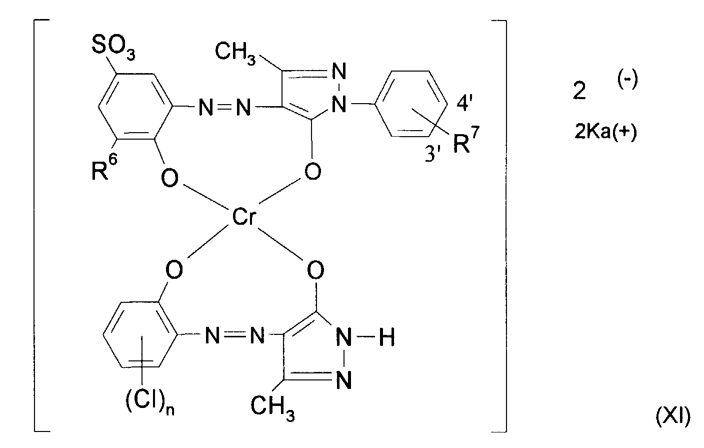 worin
R⁶ für Wasserstoff, Chlor oder Nitro,
R⁷ für Alkyl, welches in 3'- oder 4'-Stellung des Phenylringes gebunden ist,
n für 1 oder 2 steht, und
Ka⁽⁺⁾ für ein Kation steht.

12. Verfahren zum Trichromiefarben von amidgruppenhaltigen Materialien, insbesondere von Leder und Pelzen, dadurch gekennzeichnet, daß eine Farbstoffmischung gemäß Anspruch 11 eingesetzt wird.

## Claims

1. 1:2 chromium complex dyestuffs of the formula (I) 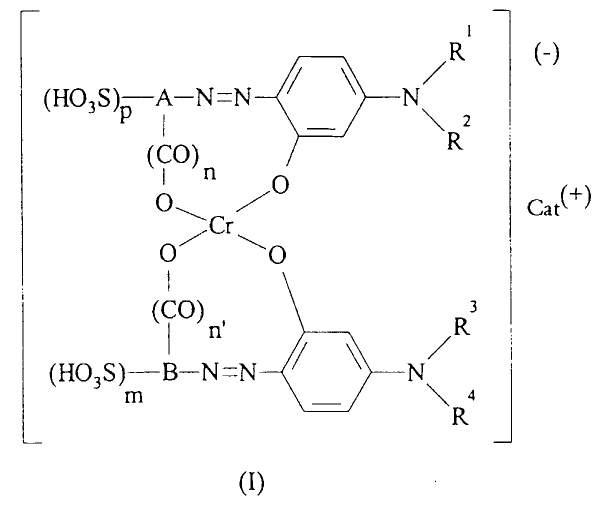 in which
A and B, independently of one another, represent the radical of a benzene or naphthalene ring each of which is substituted or unsubstituted, the complexing group being in each case in the o position relative to the azo group, and
R¹, R², R³ and R⁴, independently of one another, represent hydrogen, alkyl, aryl or aralkyl, except that R¹/R² and/or R³/R⁴ shall not both be methyl,
n, n', p and m, independently of one another, are 0 or 1, the sum of p and m being 1 or 2, and
Cat⁽⁺⁾ represents a cation.

2. Dyestuffs according to Claim 1 of the formula (I), in which R¹, R², R³ and R⁴, independently of one another, represent C₁-C₄-alkyl, except that R¹/R² and/or R³/R⁴ shall not both be methyl.

3. Symmetrical 1:2 chromium complex dyestuffs according to Claim 1 of the formula (II) 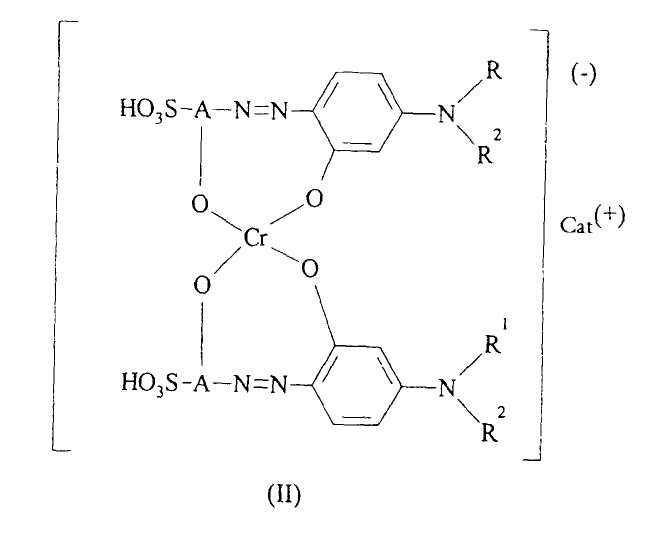 in which
A and Cat⁽⁺⁾ have the meaning given in Claim 1, and
R¹ and R², independently of one another, represent C₁-C₄-alkyl, except that R¹/R² shall not both be methyl.

4. Mixtures of the 1:2 chromium complex dyestuffs of Claim 1, containing at least two 1:2 chromium complex dyestuffs of the formula (I).

5. Process for preparing azo dyestuffs of the formula (III) 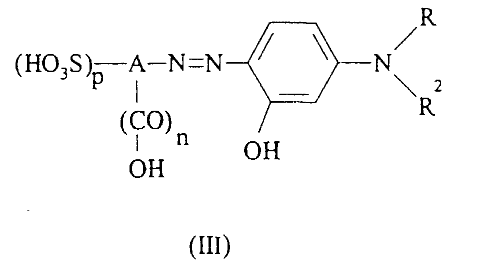 in which A, p, n, R¹ and R² have the meanings given in Claim 1,
characterized in that a diazotized amino of the formula (V) 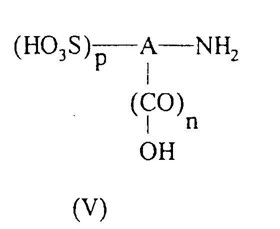 is coupled in an inert gas atmosphere at temperatures of 10 to 50°C, preferably 20 to 30°C in aqueous medium, if desired in the presence of an organic water-miscible solvent, at a pH of 8 to 12, preferably at a pH of 10 to 11, of a compound of the formula (VII)

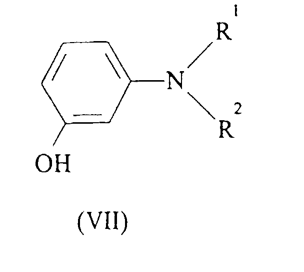

6. Liquid dyestuff preparations, characterized in that they contain, in addition to customary additives, at least one 1:2 chromium complex dyestuff according to Claim 1 of the formula (I).

7. Liquid dyestuff preparations according to Claim 6, characterized in that they contain
(a) 5 to 30 % by weight of at least one symmetrical or unsymmetrical 1:2 chromium complex dyestuff of the formula (I) according to Claim 1,
(b) 20 to 95 % by weight of water,
(c) 0 to 70 % by weight of one or more organic water-miscible solvents and
(d) 0 to 20 % by weight of a hydrotropic compound.

8. Process for dyeing and printing substrates dyeable with anionic dyestuffs, in particular of substrates made of amido-containing materials, characterized in that the substrate to be dyed is treated with at least one 1:2 chromium complex dyestuff according to Claim 1.

9. Process for spray-dyeing substrates dyeable with anionic dyestuffs, in particular of substrates made of amido-containing materials, characterized in that a liquid dyestuff preparation according to Claim 7 is used.

10. Dyestuff mixtures containing a blue dyestuff of the formula (X) 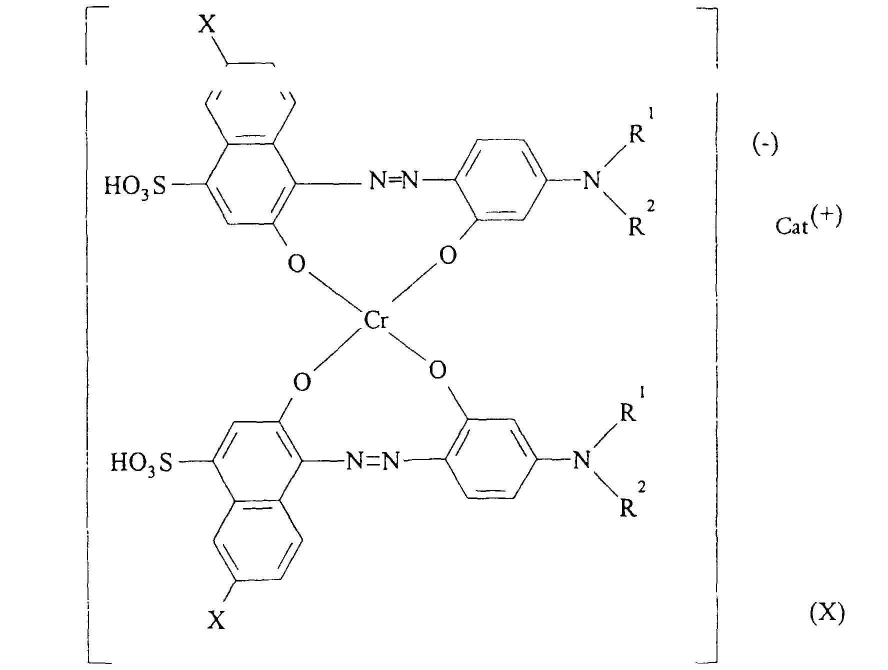 in which
R¹, R², independently of one another, represent hydrogen, alkyl, aryl or aralkyl and Cat⁽⁺⁾ has the meaning given in Claim 1,
X represents hydrogen or nitro,
and a yellow dyestuff of the formula (IX) 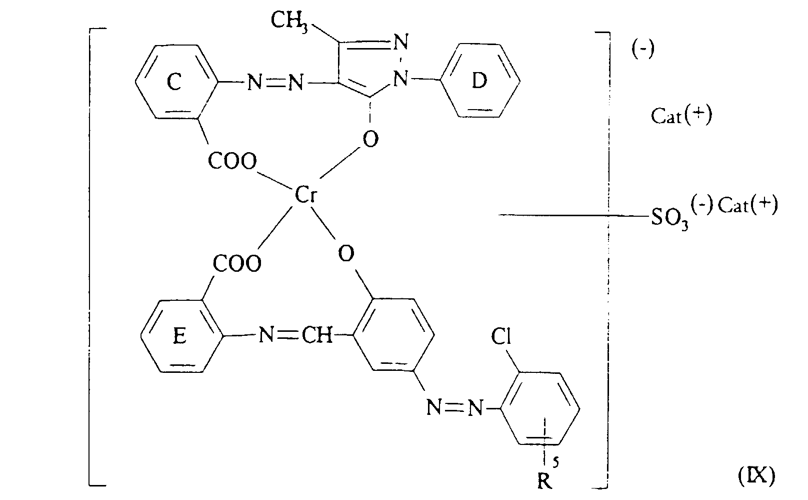 in which R⁵ represents hydrogen, Cl, OCH₃, SO₂NH₂ or CH₃ and Cat⁽⁺⁾ represents a cation, the SO₃⁽⁻⁾Cat⁽⁺⁾ group is attached to ring C, D or E, and rings C and D are unsubstituted or mono- to trisubstituted by identical or different substituents from the group consisting of Cl, NO₂, CH₃, aminosulphonyl, C₁-C₄-(di)-alkylaminosulphonyl or C₁-C₄-alkylcarbonylamino.

11. Dyestuff mixture according to Claim 10, additionally containing a red dyestuff of the formula (XI) 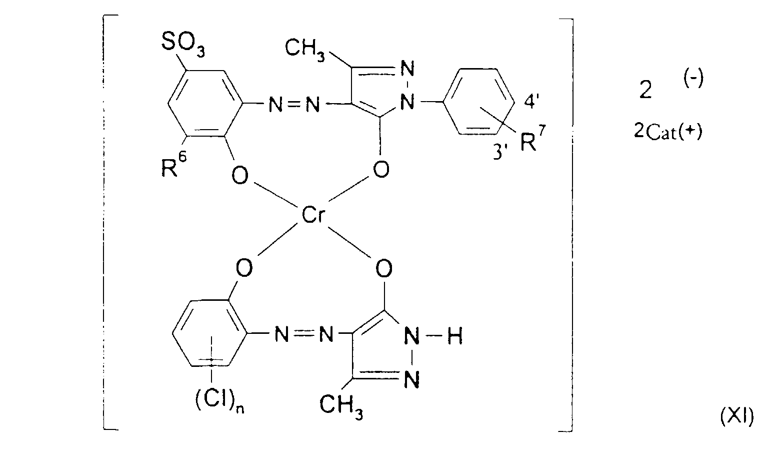 in which
R⁶ represents hydrogen, chlorine or nitro,
R⁷ represents alkyl which is attached to the phenyl ring in the 3' or 4' position,
n represents 1 or 2, and
Cat⁽⁺⁾ represents a cation.

12. Process for the trichromatic dyeing of amido-containing materials, in particular of leather and pelts, characterized in that a dyestuff mixture according to Claim 11 is used.

## Revendications

1. Colorant complexe de chrome 1:2 de formule (I) 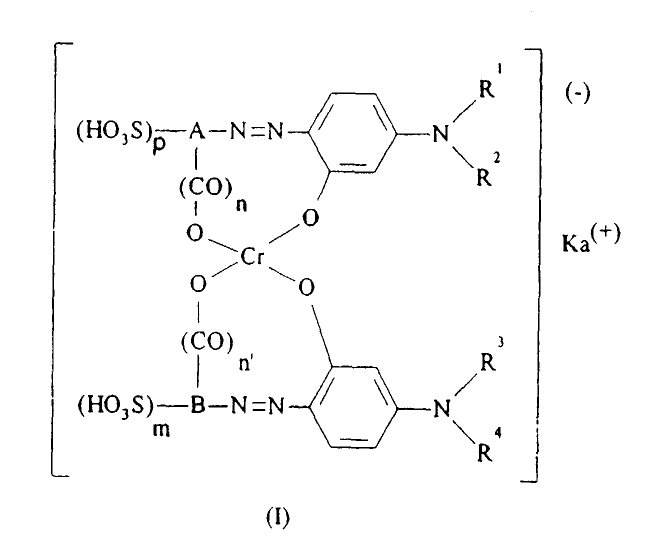 dans laquelle
A et B indépendamment l'un de l'autre signifient le reste d'un cycle benzène ou naphtalène à chaque fois éventuellement substitué, où chaque fois le groupe formant le complexe se trouve en position o par rapport au groupe azoïque,
et
R¹, R², R³ et R⁴ signifient indépendamment l'un de l'autre l'hydrogène, un groupe alkyle, aryle ou aralkyle, où il est exclut que R¹/R² et/ou R³/R⁴ signifient simultanément un groupe méthyle,
n,n', p et m signifient indépendamment l'un de l'autre le nombre 0 ou 1, la somme de p et m étant égale à 1 ou 2, et
Ka⁽⁺⁾ signifie un anion.

2. Colorant selon la revendication 1 de formule (I) dans laquelle R¹, R², R³ et R⁴ signifient indépendamment l'un de l'autre un groupe alkyle en C₁-C₄, où il est exclu R¹/R² et/ou R³/R⁴ signifient simultanément un groupe méthyle.

3. Colorant complexe de chrome 1:2 symétrique selon la revendication 1 de formule (II) 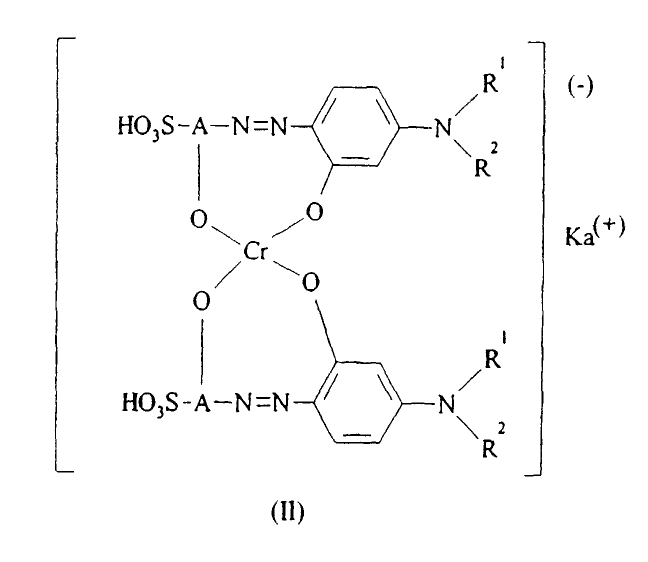 dans laquelle
A et Ka⁽⁺⁾ ont la signification donnée dans la revendication 1, et
R¹ et R² signifient indépendamment l'un de l'autre un groupe alkyle en C₁-C₄, où il est exclu que R¹/R² signifient en même temps le groupe méthyle.

4. Mélanges du colorant complexe de chrome 1:2 selon la revendication 1, contenant au moins deux colorants complexes de chrome 1:2 de formule (I).

5. Procédé de préparation de colorants azoïques de formule (III) 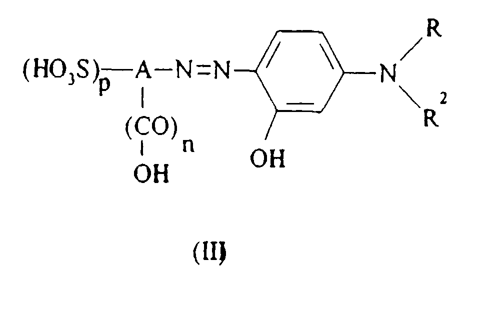 dans laquelle A, p, n, R¹ et R² ont les significations données dans la revendication 1, caractérisé en ce que l'on couple une amine diazotée de formule (V) 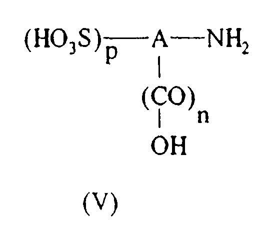 dans une atmosphère de gaz inerte à des températures de 10 à 50°C, de préférence 10 à 30°C, dans un milieu aqueux, éventuellement en présence d'un solvant organique miscible avec l'eau, à un pH de 8 à 12, de préférence un pH de 10 à 11, avec un composé de formule (VII)

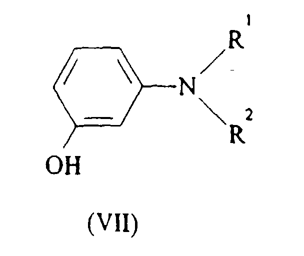

6. Compositions de colorants liquides, caractérisées en ce qu'elles contiennent outre des additifs classiques au moins un colorant complexe de chrome 1:2 selon la revendication 1 de formule (I).

7. Compositions de colorants liquides selon la revendication 6, caractérisées en ce qu'elles contiennent
(e) 5 à 30% en poids d'au moins un colorant complexe de chrome 1:2 symétrique ou non symétrique de formule (I) selon la revendication 1,
(f) 20 à 95% en poids d'eau,
(g) 0 à 70% en poids d'un ou plusieurs solvants organiques miscibles dans n'importe quel rapport avec l'eau et
(h) 0 à 20% en poids d'un composé hydrotrope.

8. Procédé de coloration et d'impression de substrats pouvant être colorés par des colorants anioniques, en particulier de substrats constitués de matériaux contenant des groupes amide, caractérisé en ce que l'on traite le substrat à colorer avec au moins un colorant complexe de chrome 1:2 selon la revendication 1.

9. Procédé de coloration par pulvérisation de substrats pouvant être colorés par des colorants anioniques, en particulier de substrats constitués de matériaux contenant des groupes amide, caractérisé en ce que l'on utilise une composition de colorants liquide selon la revendication 7.

10. Mélanges de colorants, contenant un colorant bleu de formule (X) 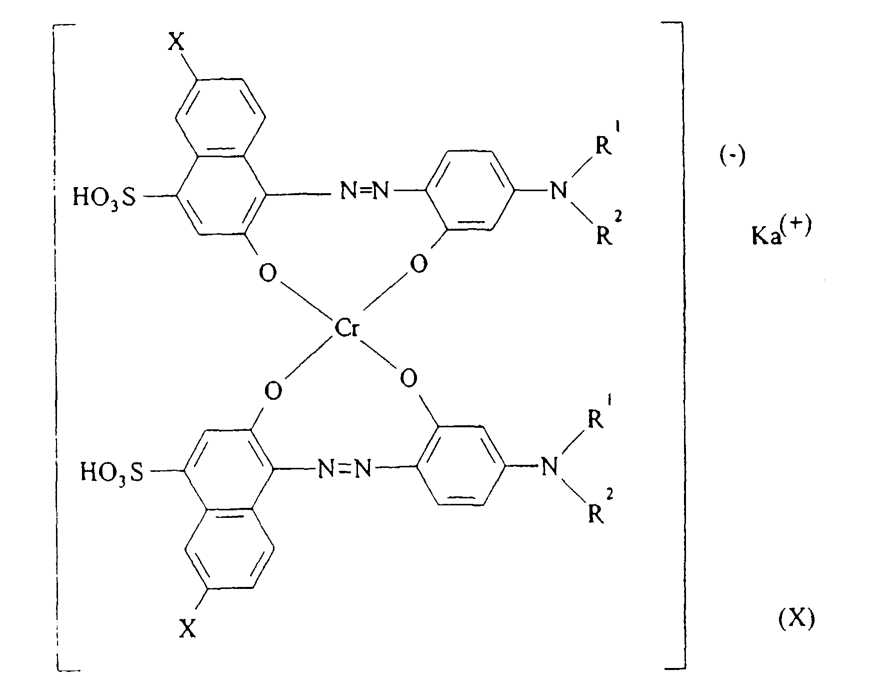 dans laquelle
R¹, R² signifient indépendamment l'un de l'autre l'hydrogène, un groupe alkyle, aryle ou aralkyle et Ka⁽⁺⁾ a la signification donnée dans la revendication 1,
X signifie l'hydrogène ou un groupe nitro,
et un colorant jaune de formule (IX) 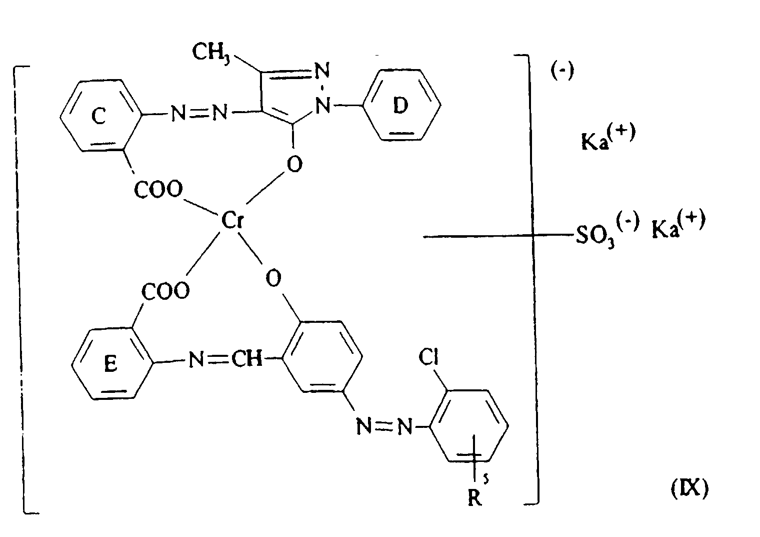 dans laquelle R⁵ signifie l'hydrogène, un groupe Cl, OCH₃, SO₂NH₂ ou CH₃ et Ka⁽⁺⁾ est un cation, le groupe SO₃⁽⁻⁾Ka ⁽⁺⁾ étant lié sur un cycle C, D ou E, et les cycles C et D étant éventuellement substitués de une à trois fois de manière identique ou différente par Cl, NO₂, CH₃, un groupe aminosulfonyle, dialkyl(en C₁-C₄)aminosulfonyle ou alkyl(en C₁-C₄)carbonylamino.

11. Mélange de colorants selon la revendication 10, contenant en outre un colorant rouge de formule (XI) 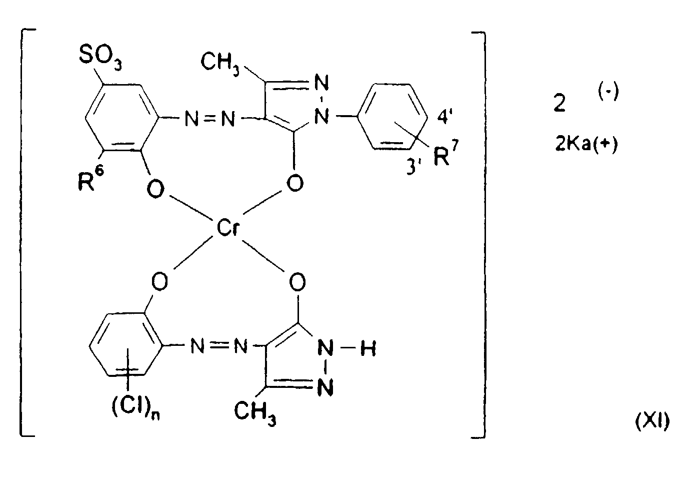 dans laquelle
R⁶ est l'hydrogène, le chlore ou un groupe nitro,
R⁷ est un groupe alkyle qui est lié en position 3' ou 4' au cycle phényle,
n vaut 1 ou 2 et,
Ka⁽⁺⁾ est un cation.

12. Procédé de coloration trichromique de matériaux contenant des groupes amide, en particulier le cuir et des peaux, caractérisé en ce que l'on utilise un mélange de colorants selon la revendication 11.
